# DEMANDE DE BREVET EUROPEEN

(11) **EP 0 669 589 A1**
(43) Date de publication de la demande: **30.08.1995**
(21) Numéro de dépôt: 95400306.7
(22) Date de dépôt: 14.02.1995
(51) Int. Cl.: G06K 1/12

(54) **Machine imprimante en couleurs**

(30) Priorité: 24.02.1994 FR 9402116
(71) Demandeur: GEMPLUS CARD INTERNATIONAL S.A., F-13420 Gémenos (FR)
(72) Inventeur: Morgavi, Paul, F-75116 Paris (FR); Marietti, Jean-Paul, F-75116 Paris (FR); Oubrayrie, Jean-Jacques, F-75116 Paris (FR)
(74) Mandataire: Ballot, Paul Denis Jacques

(57) **Abrégé**

L'invention concerne une machine à imprimer en couleurs de cartes.

L'invention réside dans le fait que les différentes couleurs primaires, portées par un ruban (23), sont déposées sur la carte (24) par passages successifs de cette dernière sous une même tête d'impression thermique (11) par une série d'aller-retour. A cet effet, les couleurs primaires d'une séquence sont séparées par des séparateurs qui sont différents des index entre chaque séquence et ces séparateurs et index sont détectés par un dispositif de détection (18).

Application à l'impression de cartes bancaires, des cartes d'accès personnalisées...

## Description

La présente invention concerne une machine imprimante en couleurs, haute définition, pour des cartes, notamment en matière plastique.

Il est connu des technologies de transfert d'impression sur un support rigide consistant à imprimer préalablement du papier qui est ensuite collé ou laminé sur le support rigide. La mise en oeuvre de ces technologies ne permet pas une impression indélébile puisque la tenue de l'image ou du texte est fonction de la qualité du collage ou du laminage ainsi que de celle du film protecteur soumis à l'usure des usages successifs.

L'impression monochrome directe sur support plastique plan a fait l'objet de la demande de brevet français n° 2 669 267. L'utilisation de ce procédé en trichromie nécessite que l'on dispose d'autant de têtes d'impression thermique que de couleurs, d'où un encombrement important et une lenteur d'exécution de l'impression.

L'invention a pour but de réaliser une machine imprimante en couleurs qui pallie les inconvénients précités et, à cet effet, l'invention consiste à recourir à plusieurs cycles successifs d'impression par la même tête d'impression thermique sous laquelle défile un ruban à couleurs séquentielles.

L'invention concerne une machine à imprimer en couleurs de cartes, notamment en matière plastique, qui comprend :
- un ruban qui sert de support à des colorants et substances se présentant dans un ordre séquentiel, chaque séquence de colorants et substances étant précédée par un index,
- une tête d'impression thermique qui permet de transférer un colorant ou substance du ruban sur un support par effet thermique,
- un premier moyen moteur pour entraîner le ruban sous la tête d'impression thermique,
- un deuxième moyen moteur pour entraîner la carte à imprimer sous la tête d'impression thermique et le ruban,
- un troisième moyen moteur pour déplacer la tête d'impression thermique de manière à l'approcher ou l'éloigner de la carte,

caractérisée en ce que :
- le ruban comporte des séparateurs entre les colorants d'une séquence,
- un premier dispositif de détection détecte les séparateurs et index lors du défilement du ruban,
- un deuxième dispositif de détection détecte l'entrée et la sortie de la carte sous la tête d'impression thermique,
- un troisième dispositif de détection détecte la position de la tête d'impression thermique, et
- un système de pilotage, incluant les premier, deuxième et troisième dispositifs de détection, commande les premier, deuxième et troisième moyens moteurs de manière à présenter la carte à imprimer sous la tête d'impression autant de fois que de colorants et substances dans la séquence.

Dans une variante de l'invention, la tête d'impression thermique est dotée d'un dispositif aplatisseur modifiant l'angle d'échappement du ruban.

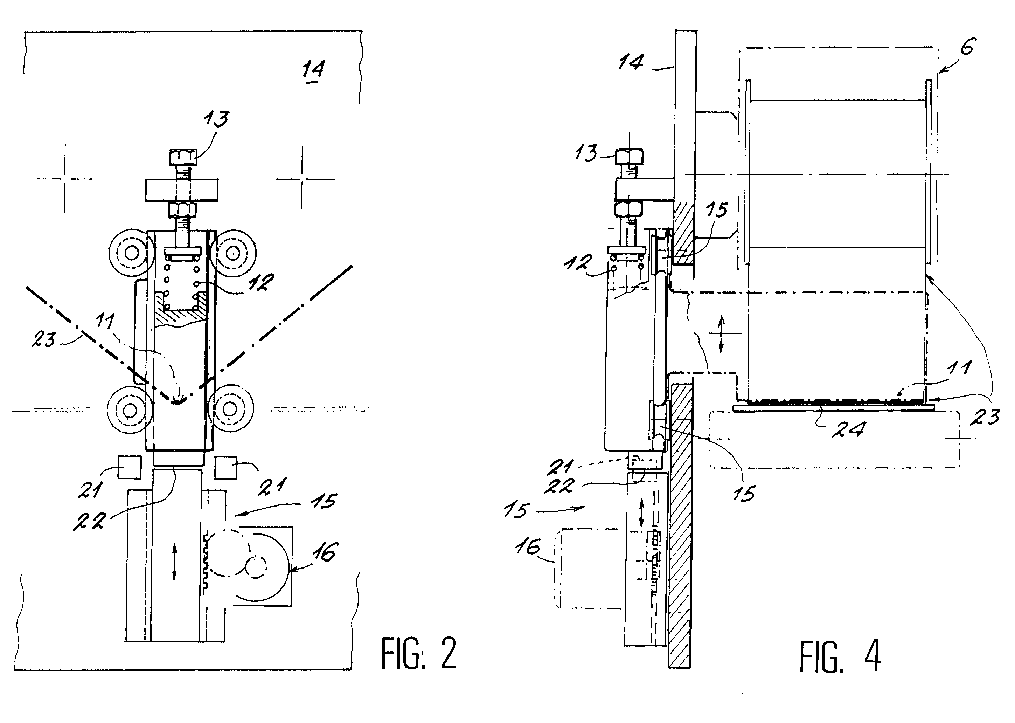

D'autres caractéristiques et avantages de la présente invention apparaîtront à la lecture de la description suivante d'un exemple particulier de réalisation, ladite description étant faite en relation avec les dessins joints dans lesquels la figure 1 est une vue de face des éléments constitutifs d'un exemple particulier de réalisation de la machine imprimante en couleurs selon l'invention, la figure 2 est une vue arrière de la tête d'impression de la machine imprimante, la figure 3 représente une partie d'un ruban support de colorants, la figure 4 représente une coupe de la tête d'impression et la figure 5 est un schéma fonctionnel d'un système de pilotage de la machine à imprimer.

Nous décrirons tout d'abord chacun des composants de la machine puis nous présenterons le fonctionnement en suivant le cheminement d'une carte pendant tous les cycles de son impression.

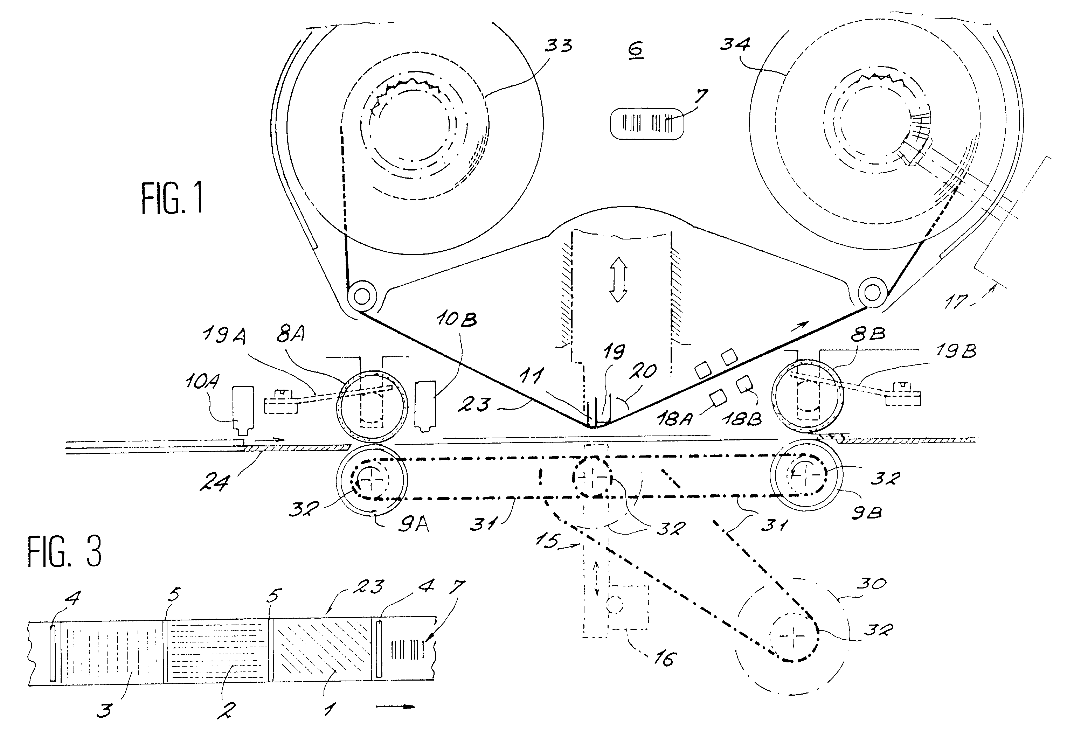

La machine imprimante en couleurs selon l'invention utilise un ruban 23 (figures 1 et 3), qui constitue une structure support de colorants se présentant séquentiellement dans l'ordre, jaune 1, magenta 2, cyan 3. Chaque segment de trois couleurs est séparé du suivant par une marque d'index 4 de couleur noire qui a une longueur de quinze millimètres. Chaque couleur est séparée de la suivante par une bande noire ayant une longueur de cinq millimètres et appelée séparateur 5.

La longueur de chaque couleur est un général identique mais peut être variable en fonction de la longueur de la carte et des zones à imprimer sur celle-ci. Les séparateurs 5 ont une longueur sensiblement égale à la moitié de celle des index 4.

Le ruban est présenté sous la forme d'une cassette 6 munie d'un code 7, par exemple un code barres, qui permet de coder les caractéristiques de colorimétrie et de temps de chauffe pour le transfert des colorants. En variante, ce code peut également être imprimé sur l'amorce du ruban. Ce code est détecté par un dispositif de détection optique ou autre non représenté sur les figures, dont la position dépend de celle du code.

La cassette 6 comprend une structure dans laquelle peuvent tourner une bobine de stockage 33 du ruban 23 et une bobine réceptrice 34.

En plus des trois colorants cités, le ruban peut comporter une plage revêtue d'un film protecteur, de longueur variable, destiné à être transféré sur la carte après impression. Le segment séquentiel comporte alors quatre plages distinctes, trois séparateurs et une marque d'index.

La carte à imprimer 24 est déplacée par un système d'entraînement qui comprend deux séries de rouleaux : des rouleaux presseurs 8A et 8B, à ressort 19A, 19B, au-dessus de la carte, des rouleaux d'entraînement 9A et 9B, en-dessous de la carte, qui sont entraînés par un moteur électrique réversible 30 et un ensemble de courroies 31, pignons et poulies 32. Le système d'entraînement est pourvu d'un dispositif de détection 10 d'entrée 10A et de sortie 10B de la carte par cellules optiques qui sont disposées de part et d'autre des premiers rouleaux 8A et 9A.

Le transfert des colorants et autres substances du ruban 23 sur la carte 24 à imprimer est réalisé par une tête d'impression thermique 11 qui exerce sur le ruban et la carte à imprimer une pression pouvant varier au moyen d'un ressort taré 12 (figure 2) réglable par une vis 13. Le mouvement de montée et de descente de la tête d'impression s'opère le long d'un rail de guidage 14; ce mouvement est réalisé par un actuateur linéaire 15 entraîné par un moteur 16. A l'actuateur linéaire est associé un dispositif de détection 21 par cellules optiques de la position de la tête thermique.

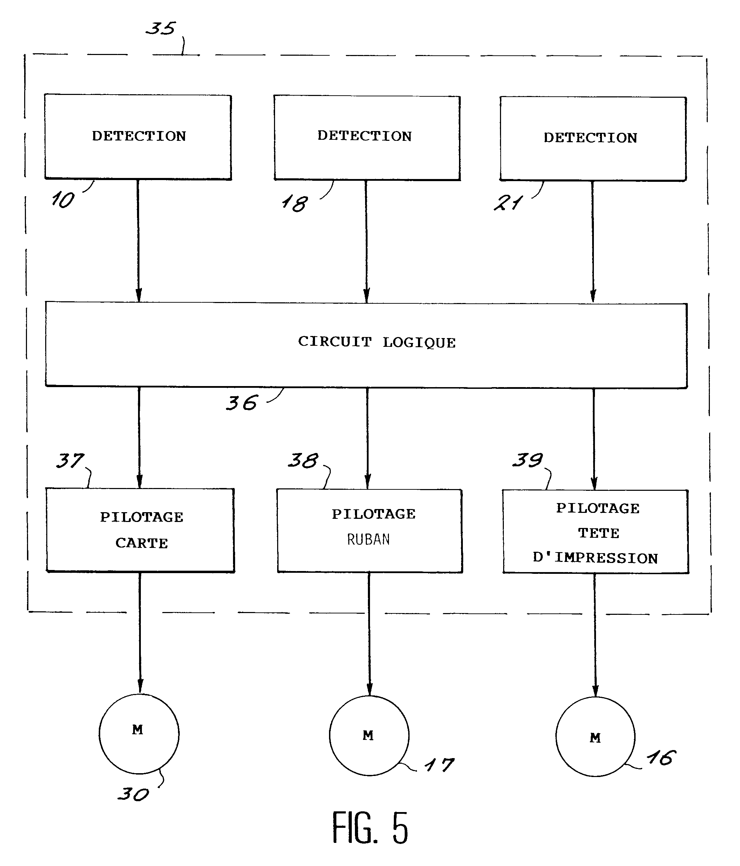

La bobine réceptrice 34 de la cassette de ruban est entraînée par un moteur pas à pas 17 dont les impulsions d'avance sont fournies par un système de pilotage 35 (figure 5).

La position du ruban est détectée par un dispositif de détection 18 comportant deux paires 18A, 18B de cellules optiques positionnées après la tête d'impression dans le sens de déroulement du ruban sous celle-ci et distantes de sept millimètres et demi par exemple.

Un dispositif aplatisseur 19 est lié à la tête d'impression thermique, la base de l'aplatisseur, de forme semi-circulaire, est rehaussée de 0,5 à 1mm par rapport à celle de la tête d'impression.

Les axes des deux éléments sont distants d'environ dix millimètres.

L'aplatisseur détermine un angle d'échappement 20 qui est imposé au ruban.

Les moteurs 16, 17 et 30 sont commandés par un système de pilotage 35 (figure 5) qui comprend :
- les dispositifs de détection 10, 18 et 21,
- un circuit logique 36, du type microprocesseur, qui reçoit les signaux de détection fournis par les dispositifs de détection 10, 18 et 21, et qui élabore des signaux appliqués à des dispositifs de pilotage des moteurs 16, 17 et 30,
- un dispositif de pilotage 37 du moteur 30 pour faire défiler la carte 24 sous la tête thermique dans les deux sens,
- un dispositif de pilotage 39 du moteur 16 de la tête d'impression thermique permettant d'amener la tête d'impression thermique au contact du ruban support de colorants et de la carte à imprimer et de dégager la tête lors de la translation de la carte,
- un dispositif de pilotage 38 du moteur 17 de la bobine réceptrice 34 de manière, d'une part, à positionner successivement chaque colorant ou substance en fonction des translations de la carte à imprimer sous la tête d'impression thermique, et d'autre part, à maintenir une vitesse de défilement constante du ruban sous la tête en dépit de l'accroissement du diamètre du tambour de la bobine à chaque tour,

Le fonctionnement de la machine imprimante est le suivant. Lorsque la carte 24 est présentée dans le système d'alimentation, elle est détectée par le dispositif de détection 10A, 10B qui active les rouleaux d'entraînement 9 par l'intermédiaire du circuit logique 36 et du dispositif de pilotage 37. La tête d'impression thermique 11 vient se positionner contre la carte au moyen de l'actuateur linéaire 15 qui fait descendre la tête le long du rail de guidage 14 jusqu'à ce que le dispositif de détection 21 détecte un espace déterminé 22 et coupe l'alimentation du moteur 16 de l'actuateur linéaire. De ce fait, le ressort 12 exerce une pression constante sur la carte.

Le système de positionnement de la tête d'impression thermique permet d'exercer, quelle que soit l'épaisseur de la carte, une pression constante sur le ruban 23 et la carte 24 garantissant la qualité haute définition de l'impression.

Les cartes utilisées sont réputées conformes à la norme ISO 7816-2, leur épaisseur étant comprise entre 0,680 et 0,840mm. Par suite de l'utilisation des rouleaux presseurs 8A et 8B dont la position verticale peut varier, la machine imprimante peut traiter différentes épaisseurs de carte.

L'entraînement de la carte 24 est synchronisé avec la présentation de la couleur jaune sur le ruban, c'est-à-dire la détection de l'index 4; lorsque toute la carte est imprimée en jaune (détection du premier séparateur 5), le ruban 23 cesse d'être entraîné tandis que la tête d'impression thermique monte légèrement sous l'action de l'actuateur linéaire; la carte, sous l'impulsion des rouleaux d'entraînement, dont la rotation est inversée, revient sur sa base de départ exactement positionnée par le dispositif de détection 10B. Une deuxième puis une troisième translation s'opèrent pour les couleurs magenta et cyan, une quatrième translation le cas échéant pour le dépôt d'une pellicule de protection ou de toute autre substance.

L'impression de qualité haute définition implique une parfaite synchronisation de la vitesse d'avancement de la carte et de la vitesse de défilement du ruban sous la tête d'impression thermique. Or la vitesse de défilement du ruban varie en fonction de l'accroissement du diamètre du ruban sur la bobine réceptrice 34. Pour obtenir une synchronisation parfaite, on utilise un moteur pas à pas pour l'entraînement de l'axe de la bobine réceptrice 34. La commande de ce moteur est subordonnée au déplacement des repères d'index 4 et des repères séparateurs 5 entre les cellules du dispositif de détection 18. La détection d'une bande index de 15mm signale le début de présentation d'un segment de trois couleurs, la détection d'une bande de 5mm alerte sur un changement de couleur.

La distance entre les deux paires de cellules, 7,5 millimètres, permet d'éliminer toute source d'erreur quant à la nature du repère détecté : inter-segments ou inter-colorants.

Cette distance fixe de 7,5 millimètres est utilisée comme base de comptage de la longueur de ruban utilisé qu'il convient d'enrouler sur la bobine réceptrice 34 dont le diamètre s'accroît à chaque tour. Le comptage de la longueur du ruban utilisé détermine le déclenchement de la commande du moteur pas à pas 17 réalisant ainsi un système d'asservissement de la commande d'enroulement à la vitesse de défilement du ruban sous la tête d'impression thermique elle-même synchronisée à la vitesse constante d'entraînement de la carte par les rouleaux.

Un dispositif de pilotage de la vitesse du ruban est décrit dans la demande de brevet français intitulée : "SYSTEME ET PROCEDE DE PILOTAGE DE L'ENROULEMENT D'UN RUBAN" déposée ce jour par la demanderesse.

Le procédé de transfert thermique des colorants du ruban sur la carte implique une modulation de la température de la tête thermique en fonction de la teinte : les couleurs sombres nécessitent une température plus élevée que les couleurs claires. Cet impératif technique a tendance à provoquer, pour l'impression des couleurs sombres, un léger collage du ruban sur la carte du fait du ramollissement des composants plastiques, avec pour conséquence des défauts d'impression et un entraînement supplémentaire et parasite de la carte par le ruban collé causant d'autres défauts d'impression.

Pour pallier ces inconvénients, il est fait appel au dispositif aplatisseur 19 dont la fonction consiste à modifier l'angle d'échappement du ruban 20 afin de créer, pendant le parcours de dix millimètres séparant les axes de la tête d'impression thermique et de l'aplatisseur, une zone de moindre effort sur le ruban, sorte de ventre retardant l'arrachement de celui-ci pendant l'impression, permettant la diffusion du colorant dans le matériau de la carte, le délai étant par ailleurs suffisant pour refroidir carte et ruban.

A l'issue de la dernière translation avant de la carte, pour transférer une couleur ou le film protecteur, la machine, qui a terminé l'impression proprement dite, peut équiper la carte de dispositifs à mémoire, puces ou bandes magnétiques selon des procédés connus.

Trois vitesses d'impression sont programmées exprimées pour un millimètre parcouru en millisecondes les performances sont de : 228, 119 et 57 pour la plus grande vitesse.

## Revendications

1. Machine à imprimer en couleurs de cartes, notamment en matière plastique (23) qui comprend :
- un ruban (23) qui sert de support à des colorants et substances se présentant dans un ordre séquentiel, chaque séquence de colorants et substances étant précédée par un index (4),
- une tête d'impression thermique (11) qui permet de transférer un colorant ou substance sur un support par effet thermique,
- un premier moyen moteur (17) pour entraîner le ruban (23) sous la tête d'impression thermique (11),
- un deuxième moyen moteur (8, 9, 19, 30 à 32) pour entraîner la carte à imprimer (24) sous la tête d'impression thermique (11) et le ruban (23),
- un troisième moyen moteur (16) pour déplacer la tête d'impression thermique (11) de manière à l'approcher ou l'éloigner de la carte à imprimer (24),
caractérisée en ce que :
- le ruban (23) comporte des séparateurs (5) entre les colorants et substances d'une séquence,
- un premier dispositif de détection (18) détecte les séparateurs (5) et index (4) lors du défilement du ruban (23),
- un deuxième dispositif de détection (10) détecte l'entrée et la sortie de la carte à imprimer sous la tête d'impression thermique (11),
- un troisième dispositif de détection (21) détecte la position de la tête d'impression thermique (11),
- un système de pilotage (35), incluant les premier, deuxième et troisième dispositifs de détection, commande les premier, deuxième et troisième moyens moteurs de manière à présenter la carte à imprimer (24) sous la tête d'impression autant de fois que de colorants dans la séquence.

2. Machine à imprimer selon la revendication 1, caractérisée en ce que les séparateurs (5) entre les colorants et substances ont une longueur différente de celle des index (4) entre les séquences et ont une couleur différente de celle des colorants et substances.

3. Machine à imprimer selon la revendication 2, caractérisée en ce que les séparateurs (5) ont une longueur sensiblement égale à la moitié de celle des index (4).

4. Machine à imprimer selon la revendication 2 ou 3, caractérisée en ce que les index (4) et les séparateurs (5) sont de couleur noire.

5. Machine à imprimer selon l'une des revendications précédentes 1 à 4, caractérisée en ce que le premier dispositif de détection (18) des index (4) et séparateurs (5) comprend deux cellules élémentaires de détection (18A, 18B) séparées par une distance permettant de distinguer les index (4) des séparateurs (5).

6. Machine à imprimer selon la revendication 5, caractérisée en ce que le premier dispositif de détection (18) est disposé après la tête d'impression thermique dans le sens de défilement du ruban.

7. Machine à imprimer selon l'une quelconque des revendications précédentes, caractérisée en ce que le deuxième dispositif de détection (10) comprend une première cellule élémentaire (10A) disposée à l'entrée de la machine pour détecter l'entrée de la carte à imprimer, et une deuxième cellule élémentaire (10B) disposée avant la tête d'impression thermique (11) pour déterminer la position de la carte par rapport à la tête d'impression thermique.

8. Machine à imprimer selon l'une quelconque des revendications précédentes, caractérisée en ce que le troisième dispositif de détection (21) comprend une cellule élémentaire qui détecte la position de la tête d'impression thermique par rapport à la carte à imprimer de manière à arrêter le troisième moyen moteur (16) dès qu'un espace déterminé (22) est détecté.

9. Machine à imprimer selon l'une quelconque des revendications précédentes, caractérisée en ce que le système de pilotage (35) comprend, outre les premier, deuxième et troisième dispositifs de détection,
- un circuit logique (36) qui effectue des opérations logiques sur les signaux fournis par les premier, deuxième et troisième dispositifs de détection et qui fournit des signaux de commande,
- un premier dispositif de pilotage (38) du premier moyen moteur (17) de manière, d'une part, à positionner successivement chaque colorant en fonction des translations de la carte (24) à imprimer sous la tête d'impression thermique (11) et, d'autre part, à maintenir une vitesse de défilement constante du ruban (23) sous la tête d'impression thermique (11) en dépit de l'accroissement du diamètre de la bobine réceptrice (34),
- un deuxième dispositif de pilotage (37) du deuxième moyen moteur (30) de manière à présenter successivement plusieurs fois la carte (24) sous la tête d'impression thermique (11) par une série de translations aller et retour, et
- un troisième dispositif de pilotage (39) du troisième moyen moteur (16) pour amener la tête d'impression thermique (11) en contact du ruban (23) et de la carte (24) à imprimer lors d'une translation dans le sens de défilement du ruban, et de la dégager lors de la translation inverse de la carte à imprimer.

10. Machine à imprimer selon l'une quelconque des revendications précédentes, caractérisée en ce que la tête thermique d'impression (11) est munie d'un dispositif aplatisseur (19) qui modifie l'angle d'échappement du ruban de manière à retarder l'arrachement de celui-ci.

11. Machine à imprimer selon la revendication 10, caractérisée en ce que le dispositif aplatisseur (19) présente une base en contact avec le ruban (23) qui est semi-circulaire, est rehaussée d'environ un millimètre par rapport à la base de la tête d'impression et est placée à environ dix millimètres de la base de ladite tête dans le sens de défilement du ruban (23).

12. Machine à imprimer selon l'une quelconque des revendications précédentes, caractérisée en ce que le deuxième moyen moteur comprend des rouleaux d'entraînement (9A, 9B) et des rouleaux presseurs (8A, 8B) associés, ces derniers étant équipés de ressorts (19A, 19B) de manière à permettre le déplacement vertical des rouleaux presseurs en fonction de l'épaisseur de la carte à imprimer tout en maintenant une pression constante.
